# EUROPÄISCHE PATENTSCHRIFT

(11) **EP 4 337 508 B1**
(45) Veröffentlichungstag und Bekanntmachung des Hinweises auf die Patenterteilung: **26.08.2026**
(21) Anmeldenummer: 22726425.6
(22) Anmeldetag: 28.04.2022
(51) Int. Cl.: G05D 1/00

(54) **VERFAHREN ZUM BEREITSTELLEN EINER ZUKÜNFTIG ABFAHRBAREN TRAJEKTORIE FÜR EIN ZUMINDEST TEILWEISE ASSISTIERT BETRIEBENES KRAFTFAHRZEUG SOWIE ASSISTENZSYSTEM**
METHOD FOR PROVIDING A TRAJECTORY THAT IS TO BE TRAVERSED IN THE FUTURE FOR A MOTOR VEHICLE OPERATED IN AN AT LEAST PARTIALLY ASSISTED MANNER, AND ASSISTANCE SYSTEM
PROCÉDÉ POUR FOURNIR À UN VÉHICULE AUTOMOBILE AU MOINS PARTIELLEMENT ASSISTÉ UNE FUTURE TRAJECTOIRE POUVANT ÊTRE PARCOURUE ET SYSTÈME D'ASSISTANCE

(30) Priorität: 10.05.2021 DE 102021204723
(43) Veröffentlichungstag der Anmeldung: 20.03.2024
(73) Patentinhaber: VOLKSWAGEN AKTIENGESELLSCHAFT, 38440 Wolfsburg (DE)
(72) Erfinder: KOCH, Niklas, 38479 Tappenbeck (DE); SEELAND, Jana, 38448 Wolfsburg (DE); HOPP, Christian, 38302 Wolfenbüttel (DE)
(86) Internationale Anmeldenummer: PCT/EP2022/061410
(87) Internationale Veröffentlichungsnummer: WO 2022/238138

(56) Entgegenhaltungen:
- CN-A- 102 939 623
- DE-A1- 102016 216 157
- JP-A- 2020 166 633
- US-A1- 2017 213 457
- US-A1- 2018 111 623
- US-A1- 2019 384 294

## Beschreibung

Die Erfindung betrifft ein Verfahren zum Bereitstellen einer zukünftig abfahrbaren Trajektorie für ein zumindest teilweise assistiert betriebenes Kraftfahrzeug mittels eines Assistenzsystems gemäß dem geltenden Patentanspruch 1. Ferner betrifft die Erfindung ein Computerprogrammprodukt sowie ein Assistenzsystem.

Aus dem Stand der Technik ist bereits ein sogenanntes trainiertes Parken bekannt, wobei hierbei eine Trajektorie zu einer festgelegten Endposition angelernt werden kann. Dieses Anlernen wird auch als Teach-in bezeichnet. Das Kraftfahrzeug fährt die angelernte Strecke später automatisiert ab, was auch als sogenannter Redrive-Modus bezeichnet wird. Dabei kann sich der Nutzer des Kraftfahrzeugs innerhalb oder außerhalb des Kraftfahrzeugs befinden, die Überwachung der assistierten Funktion wahrnehmen oder das Fahrzeug fährt autonom ohne Fahrerüberwachung.

Der Fahrer ist jedoch eventuell nicht in der Lage oder gewillt, die Trajektorie für ein trainiertes Parken anzutrainieren. Möglicherweise kennt der Fahrer die Funktion des Fahrzeugs nicht hinreichend gut beziehungsweise genau oder dem Fahrer ist das Anlernen zu aufwendig oder zu kompliziert. In der Folge fährt der Fahrer wiederkehrend manuell ab, obwohl die Strecke durch eine Assistenzfunktion für das Parken beziehungsweise für den Parkvorgang abgefahren werden könnte.

Die DE 10 2013 015 348 A1 betrifft ein Verfahren zum Betrieb eines Fahrzeugs, insbesondere zum Anfahren eines Parkplatzes in einer nicht einsehbaren/straßenfernen Parkzone durch das Fahrzeug, bei welchem Umgebungsdaten des Fahrzeugs erfasst werden, wobei beim Anfahren eines Parkplatzes in der Parkzone identifiziert wird, ob dieser ein Heim-Parkplatz oder die Parkzone eine Heim-Parkzone ist, und bei identifiziertem Heim-Parkplatz oder Heim-Parkzone und Annäherung des Fahrzeugs an den identifizierten Heim-Parkplatz beziehungsweise an die identifizierte Heim-Parkzone erfasste Umgebungsdaten oder Fahrdaten gespeichert oder aktualisiert werden, wobei in einem Lernmodus anhand der Umgebungsdaten oder Fahrdaten mehrere Trajektorien für den mindestens einen Heim-Parkplatz der mindestens einen Heim-Parkzone ermittelt und gespeichert werden, und wobei in einem Betriebsmodus beim Anfahren des mindestens einen Heim-Parkplatzes der mindestens einen Heim-Parkzone mögliche fahrbare Trajektorien zur Auswahl und Aktivierung ausgegeben werden oder wenn nur eine der ermittelten Trajektorien fahrbar ist, diese automatisch aktiviert wird.

Die DE 10 2014 018 189 A1 betrifft ein Verfahren zum Betrieb eines Fahrzeugs in zumindest einer Parkvorgangssituation. Es wird zumindest einer vorgegebenen Parkvorgangssituation des Fahrzeugs zumindest eine vorgegebene fahrzeugspezifische oder parkvorgangssituationsspezifische Funktion zugeordnet, es wird ermittelt, ob sich das Fahrzeug in der zumindest einen vorgegebenen Parkvorgangssituation befindet, und die dieser zumindest einen vorgegebenen Parkvorgangssituation zugeordnete vorgegebene fahrzeugspezifische oder parkvorgangssituationsspezifische Funktion wird einem Fahrzeugnutzer zur Aktivierung angeboten oder automatisch aktiviert, wenn sich das Fahrzeug in der zumindest einen vorgegebenen Parkvorgangssituation befindet.

Die DE 10 2016 216 157 A1 beschreibt ein Verfahren zum Betrieb eines Kraftfahrzeugs, umfassend die Schritte: - Ermitteln wenigstens eines eine jeweilige gefahrenen Trajektorie des oder eines jeweiligen weiteren Kraftfahrzeugs beschreibenden Bahndatensatzes und senden des Bahndatensatzes an eine fahrzeugexterne Speichereinrichtung, - Bereitstellen wenigstens eines Führungsdatensatzes für das Kraftfahrzeug durch die Speichereinrichtung, wobei jeder Führungsdatensatz einer der Trajektorien zugeordnet ist und in Abhängigkeit des die jeweilige zugeordnete Trajektorie beschreibenden Bahndatensatzes ermittelt wird, und - Ansteuern der Fahrzeugeinrichtung des Kraftfahrzeugs in Abhängigkeit des bereitgestellten Führungsdatensatzes oder, falls mehrere der Führungsdatensätze durch die Speichereinrichtung bereitgestellt werden, eines kraftfahrzeugseitig ausgewählten der bereitgestellten Führungsdatensätze zur Ausgabe eines die zugeordnete Trajektorie betreffenden Fahrhinweises an einen Fahrer des Kraftfahrzeugs und/oder zur Durchführung wenigstens eines Fahreingriffs.

Aufgabe der vorliegenden Erfindung ist es, ein Verfahren sowie ein Assistenzsystem zu schaffen, mittels welchen einem Nutzer des Kraftfahrzeugs eine Trajektorie für einen zumindest teilweise assistierten Betrieb bereitgestellt werden kann.

Diese Aufgabe wird durch ein Verfahren sowie durch ein Assistenzsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bereitstellen einer zukünftig abfahrbaren Trajektorie für ein zumindest teilweise assistiert betriebenes Kraftfahrzeug mittels eines Assistenzsystems mit einem Erfassen einer aktuellen Position des Kraftfahrzeugs mittels einer Erfassungseinrichtung des Kraftfahrzeugs. Die aktuelle Position wird mit zumindest einer in einer Speichereinrichtung des Assistenzsystems hinterlegten Position verglichen, wobei der hinterlegten Position zumindest eine bereits historisch abgefahrenen Trajektorie eines weiteren Kraftfahrzeugs zugeordnet ist. Bei einer Übereinstimmung der aktuellen Position mit der hinterlegten Position wird zumindest eine Teiltrajektorie der bereits historisch abgefahrenen Trajektorie als zukünftig abfahrbare Trajektorie bereitgestellt.

Somit kann verbessert eine zukünftig abfahrbare Trajektorie für den Nutzer des Kraftfahrzeugs bereitgestellt werden.

Insbesondere ist somit ein Verfahren vorgeschlagen, bei dem selbständig Trajektorien zum automatisierten Parken und Rangieren, beispielsweise ein trainiertes Parken beziehungsweise ein Reversing Assistant, angelernt werden können, indem Trajektorien beziehungsweise zurückgelegte Strecken aufgezeichnet und ausgewertet werden. Dabei werden gleiche Anteile und wiederkehrende Streckenanteile, wie zum Beispiel eine Hofeinfahrt, erkannt und auf Basis der wiederholten Fahrten eine Fahrerinformation in verschiedenen Ausprägungen bis hin zu einer wieder abfahrbaren Trajektorie generiert. Für die gefundenen Streckenabschnitte wird die Trajektorie für den Nutzer mittels einer geeigneten Funktion, wie zum Beispiel trainiertes Parken, angeboten.

Zum Anlernen der Park- beziehungsweise Rangiervorgänge können insbesondere künstliche Intelligenzen, statistische Modelle, Merkmalszuordnungen durch beispielsweise ein Feature-Landmarken-Matching, eine Monte-Carlo-Assoziierung, Markov-Chain oder weitere maschinelle Lernmethoden angewendet werden.

Insbesondere ist somit eine Redrive-Funktion auf Basis von weiteren Kraftfahrzeugen vorgeschlagen. Das Kraftfahrzeug selbst erkennt im Hintergrund wiederkehrende Merkmale und Verhalten, die ebenfalls zusammen mit der Fahrzeugposition, insbesondere global oder kartenrelativ, von bereits durchgeführten Park- und Rangiervorgängen anderer Kraftfahrzeuge mit gleichem oder ähnlichem Fahrziel und holt sich daraus die resultierenden Redrive-Trajektorien von der Speichereinrichtung, wobei die Speichereinrichtung beispielsweise bevorzugt auf einer kraftfahrzeugexternen elektronischen Recheneinrichtung bereitgestellt werden kann. Die kraftfahrzeugexterne elektronische Recheneinrichtung kann auch als Backend bezeichnet werden. Alternativ kann die elektronische Recheneinrichtung beziehungsweise Speichereinrichtung auch kraftfahrzeugintern bereitgestellt werden, wobei die entsprechende Trajektorie beispielsweise auch über C2X-Kommunikation (Car-to-Infrastructure) erhalten werden kann.

Die zukünftig abfahrbare Trajektorie wird dann von der Speichereinrichtung generiert und dem Nutzer zur Verfügung gestellt, wobei die zukünftig abfahrbare Trajektorie auf Basis der bereits in der Vergangenheit abgefahrenen Trajektorie erzeugt wird. Es können dabei sowohl ganze Trajektorien oder auch nur Teiltrajektorien genutzt beziehungsweise ermittelt werden.

Gemäß einer weiteren vorteilhaften Ausführungsform wird bei wiederholtem Anfahren einer möglichen Startposition ferner die Funktion zur Aufzeichnung automatisch angeboten, wenn festgestellt wird, dass für dies mögliche Startposition noch keine historischen Trajektorien abrufbar sind. Insbesondere entfällt nach dieser Ausführungsform ein explizites Teach-in, so dass für den Nutzer komfortabler der Parkvorgang beziehungsweise der Rangiervorgang durchgeführt werden kann, indem die aufgezeichnete Trajektorie als historische Trajektorie abgespeichert wird und damit für zukünftige Fahrten zur Verfügung steht. Dabei ist vorgesehen, dass das Angebot zum Teach-In nach Erkennen des wiederholten Anfahrens der möglichen Startposition angeboten wird, und dann die Trajektorie, bzw. Teiltrajektorie, aufgezeichnet wird. Alternativ kann die Aufzeichnung auch automatisch erfolgen, sobald das wiederholte Anfahren festgestellt wird, und nach Abschluss des Teach-In dem Fahrer angeboten werden, die so aufgezeichnete Route für zukünftige Situationen abzuspeichern.

Es wird die zumindest eine bereits historisch abgefahrene Trajektorie auf einer kraftfahrzeugexternen elektronischen Recheneinrichtung des Assistenzsystems bereitgestellt. Insbesondere kann beispielsweise die aktuelle Position des Kraftfahrzeugs dann an die kraftfahrzeugexterne elektronische Recheneinrichtung übertragen werden, wobei diese Position mit der Position verglichen wird, welche bereits einer Trajektorie zugeordnet ist. Es erfolgt dann das Bereitstellen, insbesondere das Übertragen, zumindest der Teiltrajektorie als zukünftig abfahrbare Trajektorie an das Kraftfahrzeug. Somit kann Speicherkapazität eingespart werden, und insbesondere kann an vielen Orten aktuell überprüft werden, ob eine entsprechende Trajektorie vorliegt.

Ferner ist vorgesehen, dass ein jeweiliger Zeitpunkt von den jeweiligen weiteren historisch abgefahrenen Trajektorien bei der Bestimmung der approximierten Trajektorie berücksichtigt wird. Insbesondere kann beispielsweise vorgesehen sein, dass älteren historisch abgefahrenen Trajektorien weniger Wichtung zufällt als neuen. Insbesondere kann dadurch auch realisiert werden, dass Änderungen innerhalb der Umgebung berücksichtigt werden. Beispielsweise können neue Schilder oder Objekte entlang der Trajektorie aufgestellt worden sein, wobei die neueren historisch abgefahrenen Trajektorien dieses Schild oder dieses Objekt umfahren. Somit kann eine aktuell zukünftig abfahrbare Trajektorie dem Nutzer bereitgestellt werden.

Gemäß einer vorteilhaften Ausgestaltungsform wird die zumindest eine bereits historisch abgefahrene Trajektorie auf Basis einer Vielzahl von weiteren Kraftfahrzeugen erzeugt. Insbesondere kann somit auf Basis von Schwarmdaten von einer Vielzahl von Kraftfahrzeugen, welche sich insbesondere in einer ähnlichen Position oder einem ähnlichen Ort befunden haben, die entsprechend bereits historisch abgefahrene Trajektorie erzeugt werden. Insbesondere kann dies durch Zusammenführen der Trajektorien und beispielsweise Approximieren erzeugt werden.

Weiterhin vorteilhaft ist, wenn auf Basis jeweiliger weiterer historisch abgefahrener Trajektorien der Vielzahl von Kraftfahrzeugen eine approximierte Trajektorie als zumindest die Teiltrajektorie bestimmt wird und dem Kraftfahrzeug bereitgestellt wird. Insbesondere, da nicht alle Kraftfahrzeuge genau die gleiche Trajektorie abfahren, ist es somit vorteilhaft, wenn die Trajektorie auf Basis der historisch abgefahrenen Trajektorien lediglich approximiert wird. Insbesondere können somit während des Anlernvorgangs beziehungsweise des Erzeugungsvorgangs entsprechende Ausreißer identifiziert werden und in der verwendeten Trajektorie eliminiert werden. So kann zum Beispiel ein einmaliges Bremsen oder Umfahren eines temporären Hindernisses aus der Redrive-Trajektorie entfernt werden.

Es hat sich weiter als vorteilhaft erwiesen, wenn die zumindest eine Teiltrajektorie einem Nutzer des Kraftfahrzeugs zur Auswahl auf einer Ausgabeeinrichtung ausgegeben wird. Insbesondere kann der Nutzer beispielsweise auf einer Anzeigeeinrichtung als Ausgabeeinrichtung die entsprechende Trajektorie oder auch eine Vielzahl von Trajektorien ausgegeben bekommen. Hierbei kann der Nutzer dann wählen, ob er die jeweilige Trajektorie auch abfahren möchte. Somit ist es ermöglicht, dass der Nutzer intuitiv die zukünftig abfahrbare Trajektorie auswählen kann. Ein unkomfortables Anlernen einer entsprechenden Trajektorie ist vorliegend nicht mehr notwendig.

Es hat sich weiterhin als vorteilhaft erwiesen, wenn mittels eines maschinellen Lernens der elektronischen Recheneinrichtung die bereits historisch abgefahrene Trajektorie ausgewertet wird. Insbesondere kann hierzu beispielsweise eine künstliche Intelligenz, beispielsweise ein neuronales Netzwerk, genutzt werden. Ferner können auch statistische Modelle, eine Merkmalszuordnung durch Feature-Landmarken-Matching, eine Monte-Carlo-Assoziierung oder auch eine Markov-Chain verwendet werden. Somit ist eine verbesserte zukünftige abfahrbare Trajektorie für den Nutzer bereitgestellt.

In einer weiteren vorteilhaften Ausgestaltungsform wird die zukünftige abfahrbare Trajektorie für einen assistierten Rangiervorgang des Kraftfahrzeugs und/oder für einen assistierten Parkvorgang des Kraftfahrzeug bereitgestellt. Insbesondere ist dies bei wiederkehrenden Positionen ermöglicht. Somit kann beispielsweise bei einem Drive-in, welcher öfter angefahren wird, ein entsprechend assistierter Rangiervorgang bereitgestellt werden. Ferner kann auch ein Parkvorgang, beispielsweise in einer Heimzone, bereitgestellt werden.

Bei dem vorgestellten Verfahren handelt es sich um ein computerimplementiertes Verfahren. Hierzu betrifft ein weiterer Aspekt der Erfindung ein Computerprogrammprodukt mit Programmcodemitteln, welche eine elektronische Recheneinrichtung dazu veranlassen, wenn diese die Programmcodemittel abarbeitet, ein Verfahren nach dem vorhergehenden Aspekt durchzuführen.

Die elektronische Recheneinrichtung weist hierzu insbesondere elektronische Bauteile, Prozessoren sowie beispielsweise integrierte Schaltkreise auf, um das entsprechende Verfahren durchführen zu können.

Ein nochmals weiterer Aspekt der Erfindung betrifft ein Assistenzsystem zum Bereitstellen einer zukünftig abfahrbaren Trajektorie für ein zumindest teilweise assistiert betriebenes Kraftfahrzeug, mit zumindest einer Speichereinrichtung, wobei das Assistenzsystem zum Durchführen eines Verfahrens nach dem vorhergehenden Aspekt ausgebildet ist. Insbesondere wird das Verfahren mittels eines Assistenzsystems durchgeführt.

Das Assistenzsystem ist dabei bevorzugt kraftfahrzeugextern ausgebildet. Alternativ kann das Assistenzsystem jedoch auch kraftfahrzeugintern bereitgestellt werden. Ferner können zum Einen auch Merkmale des Assistenzsystems kraftfahrzeugextern und zum Anderen andere Merkmale des Assistenzsystems kraftfahrzeugintern ausgebildet sein.

Vorteilhafte Ausgestaltungsformen des Verfahrens sind als vorteilhafte Ausgestaltungsformen des Computerprogrammprodukts sowie des Assistenzsystems anzusehen. Das Assistenzsystem weist dazu gegenständliche Merkmale auf, welche eine Durchführung des Verfahrens oder eine vorteilhafte Ausgestaltungsform davon ermöglichen.

Zur Erfindung gehören auch Weiterbildungen des erfindungsgemäßen Assistenzsystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Assistenzsystems hier nicht noch einmal beschrieben.

Die Erfindung umfasst auch die Kombination der Merkmale der beschriebenen Ausführungsformen.

Im Folgenden werden Ausführungsbeispiele der Erfindung beschrieben. Hierzu zeigt:
- Fig. 1: eine schematische Draufsicht auf eine Ausführungsform eines Assistenzsystems; und
- Fig. 2: ein schematisches Ablaufdiagramm gemäß einer Ausführungsform des Verfahrens.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

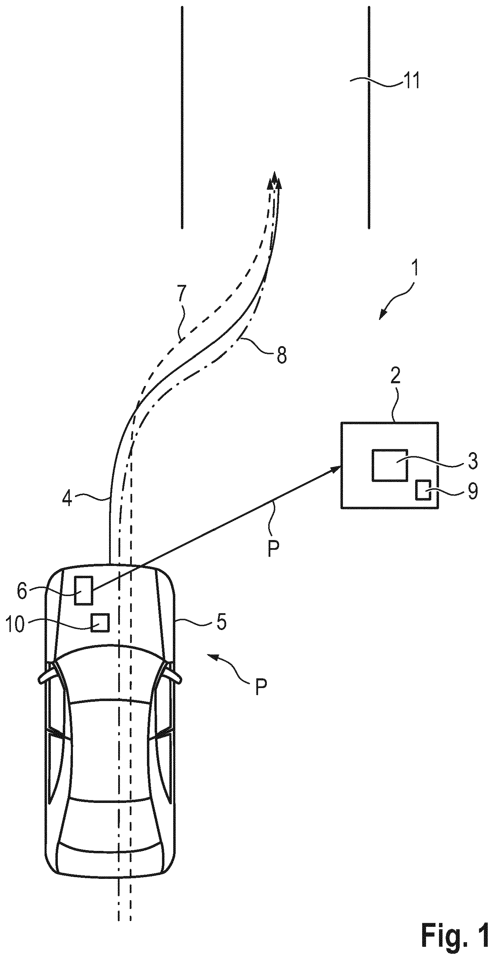

Fig. 1 zeigt eine schematische Draufsicht auf eine Ausführungsform eines Assistenzsystems 1. Vorliegend weist das Assistenzsystem 1 eine kraftfahrzeugexterne elektronische Recheneinrichtung 2 auf. Die kraftfahrzeugexterne elektronische Recheneinrichtung 2 weist ferner eine Speichereinrichtung 3 auf. Das Assistenzsystem 1 ist zum Bereitstellen einer zukünftig abfahrbaren Trajektorie 4 für ein zumindest teilweise assistiert betriebenes Kraftfahrzeug 5 ausgebildet.

Beim Verfahren zum Bereitstellen der zukünftig abfahrbaren Trajektorie 4 für das zumindest teilweise assistiert betriebene Kraftfahrzeug 5 erfolgt ein Erfassen einer aktuellen Position P des Kraftfahrzeugs 5 mittels einer Erfassungseinrichtung 6 des Kraftfahrzeugs 5. Es wird die aktuelle Position P vorliegend insbesondere an die kraftfahrzeugexterne elektronische Recheneinrichtung 2 übertragen. Es erfolgt dann ein Vergleichen der aktuellen Position P mit zumindest einer in der Speichereinrichtung 3 hinterlegten Position 9, wobei der hinterlegten Position 9 zumindest eine bereits historisch abgefahrene Trajektorie 7, 8 eines weiteren Kraftfahrzeugs zugeordnet ist. Bei einer Übereinstimmung der aktuellen Position P mit der hinterlegten Position 9 wird zumindest eine Teiltrajektorie der bereits historisch abgefahrenen Trajektorien 7, 8 als zukünftig abfahrbare Trajektorie 4 bereitgestellt.

Insbesondere ist vorgesehen, dass die zumindest eine bereits historisch abgefahrene Trajektorie 7, 8 auf Basis einer Vielzahl von weiteren Kraftfahrzeugen erzeugt wird. Ferner wird auf Basis von jeweiligen weiteren historisch abgefahrenen Trajektorien 7, 8 der Vielzahl von Kraftfahrzeugen eine approximierte Trajektorie als zumindest die Teiltrajektorie bestimmt und dem Kraftfahrzeug 5 bereitgestellt.

Vorliegend sind insbesondere zwei bereits historisch abgefahrene Trajektorien 7, 8 gezeigt. Insbesondere sind eine erste bereits historisch abgefahrene Trajektorie 7 von beispielsweise einem ersten weiteren Kraftfahrzeug und eine zweite bereits historisch abgefahrene Trajektorie 8 von einem zweiten weiteren Kraftfahrzeug gezeigt.

Des Weiteren kann vorgesehen sein, dass ein jeweiliger Zeitpunkt von den jeweiligen weiteren historisch abgefahrenen Trajektorien 7, 8 bei der Bestimmung der approximierten Trajektorie berücksichtigt wird.

Es kann ferner vorgesehen sein, dass die zumindest eine Teiltrajektorie einem Nutzer des Kraftfahrzeugs 5 zur Auswahl auf einer Ausgabeeinrichtung 10 ausgegeben wird.

Ferner kann vorgesehen sein, dass mittels eines maschinellen Lernens der elektronischen Recheneinrichtung 2 die bereits historisch abgefahrenen Trajektorien 7, 8 ausgewertet werden.

Des Weiteren kann vorgesehen sein, dass die zukünftig abfahrbare Trajektorie 4 für einen assistierten Rangiervorgang des Kraftfahrzeugs 5 oder wie vorliegend gezeigt für einen assistierten Parkvorgang des Kraftfahrzeugs 5 beispielsweise in eine Parklücke 11 bereitgestellt wird.

Insbesondere ist somit ein Verfahren zum selbständigen Anlernen von Trajektorien zum automatischen Parken beziehungsweise Rangieren vorgeschlagen, in dem die bereits historisch abgefahrenen Trajektorien 7, 8 aufgezeichnet und ausgewertet werden. Dabei werden gleiche Anteile und wiederkehrende Streckenanteile, wie zum Beispiel eine Hofeinfahrt erkannt und auf Basis der wiederholten Fahrten eine Fahrerinformation in verschiedenen Ausprägungen bis hin zu der zukünftig abfahrbaren Trajektorie 4 generiert. Für die gefundenen Streckenabschnitte wird die zukünftig abfahrbare Trajektorie 4 für den Nutzer mittels einer geeigneten Funktion, wie zum Beispiel trainiertes Parken, angeboten.

Das Kraftfahrzeug 5 erkennt dabei im Hintergrund wiederkehrende Merkmale und Verhalten ebenfalls zusammen mit der Position P, insbesondere global oder kartenrelativ, von bereits durchgeführten Park- und Rangiervorgängen anderer Kraftfahrzeuge mit gleichen oder ähnlichen Fahrzielen und holt sich daraus die resultierende zukünftig befahrbare Trajektorie 4 von in diesem Ausführungsbeispiel der kraftfahrzeugexternen elektronischen Recheneinrichtung 2. Der sogenannte Redrive der von der kraftfahrzeugexternen elektronischen Recheneinrichtung 2 generierten und zur Verfügung gestellten Trajektorie wird dem Nutzer angeboten. Bei wiederholtem Anfahren einer möglichen Startposition wird die Funktion automatisch angeboten. Somit entfällt ein explizites Teach-in für den Nutzer des Kraftfahrzeugs.

Die Funktion kann dabei innerhalb des Kraftfahrzeugs 5 abgefahren werden, so dass potentiell personenbezogene Daten nicht das Kraftfahrzeug 5 verlassen. Alternativ oder zusätzlich, je nach Kundenwunsch, können die Daten, wie zum Beispiel Positionen, Trajektorien, Zeitpunkte der Aufnahme etc. auch auf der kraftfahrzeugexternen elektronischen Recheneinrichtung 2 verarbeitet oder per C2X-Methoden (Car-to-Infrastructure) direkt mit anderen Kraftfahrzeugen nutzbar gemacht werden.

Über die verschiedenen Anlernvorgänge werden insbesondere Ausreißer identifiziert und in der verwendeten Trajektorie eliminiert. So kann zum Beispiel ein einmaliges Bremsen oder Umfahren eines temporären Hindernisses aus der Redrive-Trajektorie entfernt werden.

Die Informationen, die das Kraftfahrzeug 5 beziehungsweise vorliegend die kraftfahrzeugexterne elektronische Recheneinrichtung 2 zur Verfügung stellen oder nutzen kann, umfasst unter anderem Kartendaten, Umfelddaten beziehungsweise Trajektorien anderer Kraftfahrzeuge beziehungsweise über andere Verkehrsteilnehmer sowie Landmarken und Features zur Lokalisierung.

Insbesondere kann vorliegend von einem gesamten Parkvorgang ausgegangen werden, wobei alternativ oder ergänzend auch die Nutzung weiterentwickelt werden kann, dass nur Teilstücke von Trajektorien, also Teiltrajektorien, verglichen und erkannt werden müssen. Es kann dementsprechend nicht nur eine vollständige Redrive-Trajektorie verwendet werden, sondern es können auch Teilabschnitte anderer Trajektorien verwendet werden.

Insbesondere kann ferner vorgesehen sein, dass das Assistenzsystem 1 den wiederholten Fahrvorgang erkennt und den Nutzer des Kraftfahrzeugs 5 situationsabhängig über beispielsweise die Ausgabeeinrichtung 10 informiert, wobei hierbei dann eine entsprechende Teach-in-Funktion bereitgestellt werden kann. Das Kraftfahrzeug 5 zeichnet im Hintergrund wiederkehrende Merkmale und Verhalten gegebenenfalls zusammen mit der Position P auf, um häufig genutzte, sich wiederholende Park- und Rangiervorgänge zu erkennen. Wenn ein wiederholter Vorgang erkannt wird, wird der Nutzer des Kraftfahrzeugs 5 über die Verfügbarkeit der Funktion informiert, und das Anlernen einer optimalen Trajektorie kann angeboten werden. Die Erkennung und die Fahrerinteraktion können sowohl beim Startvorgang erfolgen als auch beim Abschluss des Vorgangs. Ein explizites Teach-in durch den Fahrer ist hierbei jedoch notwendig. Durch bereits gefahrene Manöver und/oder vorhandene Backend-Daten kann die im Teach-in angelernte Trajektorie angereichert werden. Die gelernte Trajektorie kann dann im Anschluss für den Redrive verwendet werden.

Nochmals alternativ kann das Assistenzsystem 1 den wiederholten Fahrvorgang erkennen und dem Nutzer das Speichern der im Hintergrund generierten Trajektorie anbieten. Das Kraftfahrzeug 5 zeichnet im Hintergrund wiederkehrende Merkmale und Verhalten gegebenenfalls zusammen mit der Position P auf, um häufig genutzte, sich wiederholende Park- und Rangiervorgänge zu erkennen. Wenn ein wiederholter Vorgang ausreichend gut für einen Redrive erkannt wird, wird der Fahrer über die Verfügbarkeit der Funktion informiert, und das Speichern der generierten Trajektorie wird angeboten. Die Erkennung und die Fahrerinteraktion kann sowohl beim Startvorgang erfolgen als auch bei Abschluss des Vorgangs. Der Redrive der gelernten und/oder die vom Backend angereicherte Trajektorie wird dem Fahrer beispielsweise aus der Ausgabeeinrichtung 10 angeboten. Bei wiederholtem Anfahren der Startposition wird die Funktion automatisch angeboten. Hierbei entfällt ebenfalls ein explizites, manuell vom Fahrer ausgeführtes Teach-in.

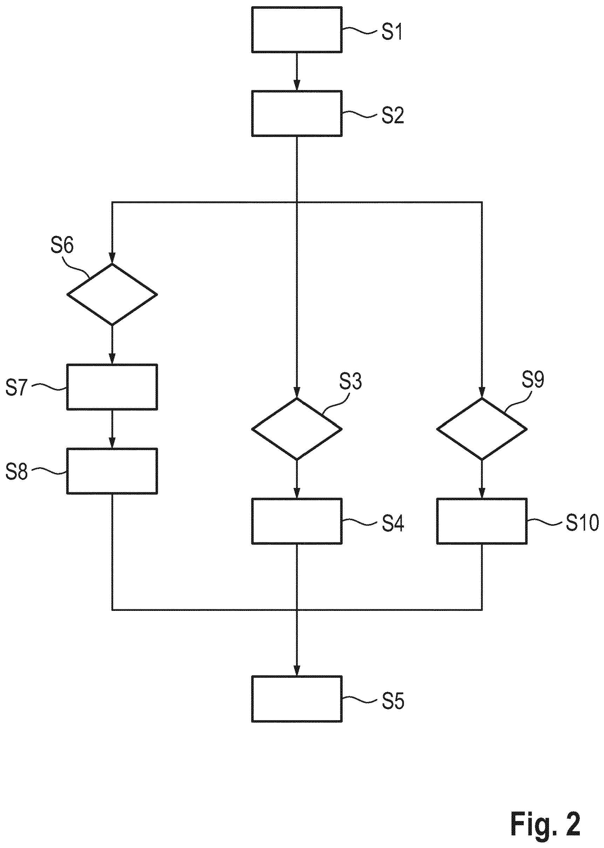

Fig. 2 zeigt ein schematisches Ablaufdiagramm gemäß einer Ausführungsform des Verfahrens. In einem ersten Schritt S1 beginnt das Verfahren. In einem zweiten Schritt S2 wird nach wiederkehrenden Trajektorien gesucht. In einer ersten Alternative ausgehend vom zweiten Schritt S2 kann in einen dritten Schritt S3 übergegangen werden, wobei in dem dritten Schritt S3 die wiederkehrende Trajektorie erkannt wird und überprüft wird, ob diese mit einer ausreichenden Qualität für den Redrive zur Verfügung gestellt werden kann. In einem vierten Schritt S4 erfolgt das Anbieten des Redrives und in einem fünften Schritt S5 die Durchführung des Redrives. Ausgehend vom zweiten Schritt S2 kann in einem sechsten Schritt S6 übergegangen werden, wobei hierbei überprüft wird, ob eine wiederkehrende Trajektorie erkannt wird. Sollte dies der Fall sein, so kann in einem siebten Schritt S7 ein sogenanntes Teach-in angeboten werden. In einem achten Schritt S8 erfolgt dann wiederum die Durchführung des Teach-in, wobei dann ausgehend vom achten Schritt S8 in den fünften Schritt S5 übergegangen werden kann. Nochmals alternativ ausgehend vom zweiten Schritt S2 kann in einen neunten Schritt S9 übergegangen werden, wobei im neunten Schritt S9 der Start für die Trajektorie eines anderen Kraftfahrzeugs passend zum eigenen Fahrziel erkannt wird. In einem zehnten Schritt S10 wird der Redrive angeboten, und es kann ausgehend vom zehnten Schritt S10 wiederum in den fünften Schritt S5 übergegangen und der Redrive durchgeführt werden.

### Bezugszeichenliste

- 1: Assistenzsystem
- 2: elektronische Recheneinrichtung
- 3: Speichereinrichtung
- 4: zukünftig abfahrbare Trajektorie
- 5: Kraftfahrzeug
- 6: Erfassungseinrichtung
- 7: erste bereits historisch abgefahrene Trajektorie
- 8: zweite bereits historisch abgefahrene Trajektorie
- 9: hinterlegte Position
- 10: Ausgabeeinrichtung
- 11: Parkplatz
- P: Position
- S1: erster Schritt
- S2: zweiter Schritt
- S3: dritter Schritt
- S4: vierter Schritt
- S5: fünfter Schritt
- S6: sechster Schritt
- S7: siebter Schritt
- S8: achter Schritt
- S9: neunter Schritt
- S10: zehnter Schritt

## Patentansprüche

1. Verfahren zum Bereitstellen einer zukünftig abfahrbaren Trajektorie (4) für ein zumindest teilweise assistiert betriebenes Kraftfahrzeug (5) mittels eines Assistenzsystems (1), mit den Schritten:
- Erfassen einer aktuellen Position (P) des Kraftfahrzeug (5) mittels einer Erfassungseinrichtung (6) des Kraftfahrzeugs (5);
- Vergleichen der aktuellen Position (P) mit zumindest einer in einer Speichereinrichtung (3) des Assistenzsystems (1) hinterlegten Position (9), wobei der hinterlegten Position (9) zumindest eine bereits historisch abgefahrenen Trajektorie (7, 8) zumindest eines weiteren Kraftfahrzeugs zugeordnet ist; und
- Bei einer Übereinstimmung der aktuellen Position (P) mit der hinterlegten Position (9) Bereitstellen zumindest einer Teiltrajektorie der bereits historisch abgefahrenen Trajektorie (7, 8) als zukünftig abfahrbare Trajektorie (4)
wobei die zumindest eine bereits historisch abgefahrenen Trajektorie (7, 8) auf einer kraftfahrzeugexternen elektronischen Recheneinrichtung (2) des Assistenzsystems (1) bereitgestellt wird, wobei ein jeweiliger Zeitpunkt von den jeweiligen weiteren historisch abgefahrenen Trajektorien (7, 8) bei der Bestimmung der approximierten Trajektorie berücksichtigt wird, und wobei älteren historisch abgefahrenen Trajektorien (7, 8) weniger Wichtung zufällt als neuen.

2. Verfahren nach Anspruch 1,
**dadurch gekennzeichnet, dass**
die zumindest eine bereits historisch abgefahrenen Trajektorie (7, 8) auf Basis einer Vielzahl von weiteren Kraftfahrzeugen erzeugt wird.

3. Verfahren nach Anspruch 2,
**dadurch gekennzeichnet, dass**
auf Basis von jeweiligen weiterer historisch abgefahrenen Trajektorien (7, 8) der Vielzahl von Kraftfahrzeugen eine approximierte Trajektorie als zumindest die Teiltrajektorie bestimmt wird und dem Kraftfahrzeug (5) bereitgestellt wird.

4. Verfahren nach einem der vorhergehenden Ansprüche,
**dadurch gekennzeichnet, dass**
die zumindest eine Teiltrajektorie einem Nutzer des Kraftfahrzeugs (5) zur Auswahl auf einer Ausgabeeinrichtung (10) ausgegeben wird.

5. Verfahren nach einem der vorhergehenden Ansprüche,
**dadurch gekennzeichnet, dass**
mittels eines maschinellen Lernens einer elektronischen Recheneinrichtung (2) die bereits historisch abgefahrenen Trajektorie (7, 8) ausgewertet wird.

6. Verfahren nach einem der vorhergehenden Ansprüche,
**dadurch gekennzeichnet, dass**
die zukünftige abfahrbare Trajektorie (4) für einen assistierten Rangiervorgang des Kraftfahrzeugs (5) und/oder für einen assistierten Parkvorgang des Kraftfahrzeug (5) bereitgestellt wird.

7. Verfahren nach einem der vorhergehenden Ansprüche,
**dadurch gekennzeichnet, dass**
nach Erfassen der aktuellen Position (P) und Feststellen einer Übereinstimmung der aktuellen Position (P) mit mindestens einer früher hinterlegten Position sowie Fehlen einer bereits historisch abgefahrenen Trajektorie (7,8) für die aktuelle Position (P) in der Speichereinrichtung (3) des Assistenzsystems (1), mindestens einer der Schritte ausgeführt wird:
- Aufzeichnen einer ab der aktuellen Position (P) gefahrenen Trajektorie und Anbieten zur Speicherung der aufgezeichneten Trajektorie als historisch abgefahrene Trajektorie in der Speichereinrichtung (3) des Assistenzsystems (1), oder
- Anbieten zur Speicherung der noch zu fahrenden Trajektorie, Aufzeichnen der ab der aktuellen Position (P) gefahrenen Trajektorie und Speicherung der aufgezeichneten Trajektorie als historisch abgefahrene Trajektorie in der Speichereinrichtung (3) des Assistenzsystems (1).

8. Computerprogrammprodukt mit Programmcodemitteln, welche eine elektronische Recheneinrichtung (2) dazu veranlassen, wenn diese die Programmcodemittel abarbeitet, ein Verfahren nach einem der Ansprüche 1 bis 7 durchzuführen.

9. Assistenzsystem (1) zum Bereitstellen einer zukünftig abfahrbaren Trajektorie (4) für ein zumindest teilweise assistiert betriebenes Kraftfahrzeug (5), mit zumindest einer Speichereinrichtung (3) wobei das Assistenzsystem (1) zum Durchführen eines Verfahrens nach einem der Ansprüche 1 bis 7 ausgebildet ist.

## Claims

1. Method for providing, by means of an assistance system (1), a trajectory (4) that can be traveled in future for an at least partially assisted motor vehicle (5), which method comprises the steps of:
- detecting a current position (P) of the motor vehicle (5) by means of a detection device (6) of the motor vehicle (5);
- comparing the current position (P) with at least one position (9) saved in a storage device (3) of the assistance system (1), wherein the saved position (9) is assigned at least one trajectory (7, 8) that has already been traveled in the past of at least one other motor vehicle; and
- if the current position (P) matches the saved position (9), providing at least one partial trajectory of the trajectory (7, 8) that has already been traveled in the past as a trajectory (4) that can be traveled in future,
wherein the at least one trajectory (7, 8) that has already been traveled in the past is provided on a vehicle-external electronic computing device (2) of the assistance system (1), wherein a time of each of the further trajectories (7, 8) that have been traveled in the past is taken into account when determining the approximated trajectory, and wherein older trajectories (7, 8) that have been traveled in the past are given less weight than new ones.

2. Method according to claim 1,
**characterized in that**
the at least one trajectory (7, 8) that has already been traveled in the past is generated on the basis of a large number of other motor vehicles.

3. Method according to claim 2,
**characterized in that**
on the basis of the respective other trajectories (7, 8) that have already been traveled in the past of the large number of motor vehicles, an approximated trajectory is determined as at least the partial trajectory and is provided to the motor vehicle (5).

4. Method according to any of the preceding claims,
**characterized in that**
the at least one partial trajectory is output on an output device (10) to a user of the motor vehicle (5) for selection.

5. Method according to any of the preceding claims,
**characterized in that**
the trajectory (7, 8) that has already been traveled in the past is evaluated by means of machine learning of an electronic computing device (2).

6. Method according to any of the preceding claims,
**characterized in that**
the trajectory (4) that can be traveled in future is provided for an assisted maneuvering operation of the motor vehicle (5) and/or for an assisted parking operation of the motor vehicle (5).

7. Method according to any of the preceding claims,
**characterized in that**
after the current position (P) has been detected and a match between the current position (P) and at least one previously saved position has been established, and in the absence of a trajectory (7,8) that has already been traveled in the past for the current position (P) in the storage device (3) of the assistance system (1), at least one of the following steps is performed:
- recording a trajectory traveled from the current position (P) and offering to store the recorded trajectory as a trajectory that has been traveled in the past in the storage device (3) of the assistance system (1), or
- offering to store the trajectory yet to be traveled, recording the trajectory traveled from the current position (P) and storing the recorded trajectory as a trajectory that has been traveled in the past in the storage device (3) of the assistance system (1).

8. Computer program product comprising program code means which cause an electronic computing device (2) to carry out a method according to any of claims 1 to 7 when the program code means are processed by the electronic computing device.

9. Assistance system (1) for providing a trajectory (4) that can be traveled in future for an at least partially assisted motor vehicle (5), which assistance system comprises at least one storage device (3), wherein the assistance system (1) is designed to carry out a method according to any of claims 1 to 7.

## Revendications

1. Procédé pour fournir une future trajectoire (4) pouvant être parcourue à un véhicule automobile (5) au moins partiellement assisté par le biais d'un système d'assistance (1), comportant les étapes de :
- détection d'une position actuelle (P) du véhicule automobile (5) par le biais d'un dispositif de détection (6) du véhicule automobile (5) ;
- comparaison de la position actuelle (P) avec au moins une position (9) stockée dans un dispositif de mémoire (3) du système d'assistance (1), dans lequel au moins une trajectoire (7, 8) déjà parcourue historiquement par au moins un autre véhicule automobile est associée à la position (9) stockée ; et
- en cas de concordance de la position actuelle (P) avec la position (9) stockée, fourniture d'au moins une trajectoire partielle de la trajectoire (7, 8) déjà parcourue historiquement en tant que future trajectoire (4) pouvant être parcourue
dans lequel l'au moins une trajectoire (7, 8) déjà parcourue historiquement est fournie sur un dispositif de calcul électronique (2) externe au véhicule du système d'assistance (1), dans lequel un moment respectif des autres trajectoires (7, 8) respectives parcourues historiquement est pris en compte lors de la détermination de la trajectoire approximée, et dans lequel une pondération moins importante est attribuée aux trajectoires (7, 8) parcourues historiquement plus anciennes qu'aux nouvelles.

2. Procédé selon la revendication 1,
**caractérisé en ce que**
l'au moins une trajectoire (7, 8) déjà parcourue historiquement est générée sur la base d'une pluralité d'autres véhicules automobiles.

3. Procédé selon la revendication 2,
**caractérisé en ce que**
sur la base d'autres trajectoires (7, 8) parcourues historiquement respectives de la pluralité de véhicules automobiles, une trajectoire approximée est déterminée comme étant au moins la trajectoire partielle et est fournie au véhicule automobile (5).

4. Procédé selon l'une des revendications précédentes,
**caractérisé en ce que**
l'au moins une trajectoire partielle est délivrée à un utilisateur du véhicule automobile (5) pour sélection sur un dispositif de sortie (10).

5. Procédé selon l'une des revendications précédentes,
**caractérisé en ce que**
la trajectoire (7, 8) déjà parcourue historiquement est évaluée par le biais d'un apprentissage automatique d'un dispositif de calcul électronique (2).

6. Procédé selon l'une des revendications précédentes,
**caractérisé en ce que**
la future trajectoire (4) pouvant être parcourue est fournie pour une opération de manœuvre assistée du véhicule automobile (5) et/ou pour une opération de stationnement assisté du véhicule automobile (5).

7. Procédé selon l'une des revendications précédentes,
**caractérisé en ce que**
après détection de la position actuelle (P) et constatation d'une concordance de la position actuelle (P) avec au moins une position stockée précédemment ainsi que de l'absence d'une trajectoire (7, 8) déjà parcourue historiquement pour la position actuelle (P) dans le dispositif de mémoire (3) du système d'assistance (1), au moins une des étapes est exécutée :
- enregistrement d'une trajectoire parcourue à partir de la position actuelle (P) et proposition de mémorisation de la trajectoire enregistrée en tant que trajectoire historiquement parcourue dans le dispositif de mémoire (3) du système d'assistance (1), ou
- proposition de mémorisation de la trajectoire encore à parcourir, enregistrement de la trajectoire parcourue à partir de la position actuelle (P) et mémorisation de la trajectoire enregistrée en tant que trajectoire historiquement parcourue dans le dispositif de mémoire (3) du système d'assistance (1).

8. Produit programme d'ordinateur comportant des moyens de code de programme qui amènent un dispositif de calcul électronique (2), lorsqu'elles sont traitées par les moyens de code de programme, à réaliser un procédé selon l'une des revendications 1 à 7.

9. Système d'assistance (1) pour fournir une future trajectoire (4) pouvant être parcourue à un véhicule automobile (5) au moins partiellement assisté, comportant au moins un dispositif de calcul électronique (3), dans lequel le système d'assistance (1) est conçu pour réaliser un procédé selon l'une des revendications 1 à 7.
